# EUROPÄISCHE PATENTSCHRIFT

(11) **EP 3 848 175 B1**
(45) Veröffentlichungstag und Bekanntmachung des Hinweises auf die Patenterteilung: **08.07.2026**
(21) Anmeldenummer: 20206581.9
(22) Anmeldetag: 23.12.2015
(51) Int. Cl.: B29C 45/00

(54) **VERFAHREN ZUR HERSTELLUNG VON FORMTEILEN UND PRODUKTE**
METHOD FOR THE PRODUCTION OF FORMED PARTS AND PRODUCTS
PROCÉDÉ POUR LA PRODUCTION DE PIÈCES MOULÉES ET PRODUITS

(30) Priorität: 23.12.2014 DE 102014019214
(43) Veröffentlichungstag der Anmeldung: 14.07.2021
(62) Teilanmeldung aus: 15819828.3
(73) Patentinhaber: bio-tec Biologische Naturverpackungen GmbH & Co. KG, 46446 Emmerich (DE)
(72) Erfinder: Schmidt, Harald, 46446 Emmerich (DE); Heß, Christoph, 46459 Rees (DE); Friedek, Wolfgang, 47551 Bedburg-Hau (DE)
(74) Vertreter: Cohausz & Florack

(56) Entgegenhaltungen:
- WO-A1-2007/063361
- WO-A1-2014/166938
- WO-A1-94/07953
- DE-A1- 102007 050 769
- US-A1- 2013 171 383

## Beschreibung

Die Erfindung betrifft ein Verfahren zur Herstellung von Formteilen sowie mit diesem Verfahren hergestellte Formteile, insbesondere mit diesem Verfahren hergestellte Hartkapseln.

Stärke ist ein attraktiver nachwachsender Rohstoff für die Herstellung von Werkstoffen. Aufgrund der schlechten Verarbeitbarkeit von Stärke stellt die Herstellung von stärkehaltigen Werkstoffen jedoch eine Herausforderung dar. Insbesondere die Herstellung von Formteilen enthaltend stärkehaltige Polymere gestaltet sich als schwierig.

Verschiedene Verfahren wurden entwickelt, um die Verarbeitbarkeit von Stärke zu verbessern. Ein oft gewähltes Verfahren ist der Zusatz von Weichmachern wie Glycerin oder Sorbitol. Diese Weichmacher müssen üblicherweise in Mengen von etwa 30 Gew.-%, bezogen auf die Menge an Stärke und Weichmacher, zugegeben werden, damit die gewünschten Effekte auftreten. Auf diese Weise kann durch den Einsatz von Druck und/oder Temperatur die Verarbeitbarkeit von Stärke deutlich verbessert werden. Die durch die Verarbeitung mit den genannten Anteilen an Weichmachern erhaltene Stärke hat die besondere Eigenschaft, dass sie thermoplastisch verarbeitbar ist. Diese Stärke wird oft auch als thermoplastische Stärke (TPS) bezeichnet. Die WO 01/37817 A1 beschreibt die Verwendung von derart hergestellter thermoplastischer Stärke zur Herstellung von Weichkapseln.

Ein weiteres Verfahren, um Stärke thermoplastisch verarbeitbar zu machen, besteht darin, eine Mischung aus Stärke und Wasser zu erzeugen. Dabei wird Wasser üblicherweise in Mengen von etwa 30 Gew.-%, bezogen auf die Menge an Stärke und Wasser, zugegeben. Auf diese Weise kann durch den Einsatz von Druck und/oder Temperatur die Verarbeitbarkeit von Stärke deutlich verbessert werden.

So beschreibt die US 4,738,724 beispielsweise ein Verfahren zur Herstellung von Hartkapseln aus einer Stärke/Wasser Mischung mit einem Wassergehalt von 5 bis 30 Gew.-%.

Mit den beschriebenen Verfahren ist es möglich, Stärke beispielsweise durch Spritzgießen in Formteile zu verarbeiten. Die auf diese Weise erhaltenen Formteile weisen oft jedoch Nachteile auf. Zum einen ist schwierig, unter Einsatz von thermoplastischer Stärke Formteile zu erhalten, die dimensionsstabil sind. Weiterhin hat thermoplastische Stärke die Neigung, Wasser aus der Umgebungsluft aufzunehmen (Hygroskopie). Selbst wenn Formteile aus thermoplastischer Stärke kurze Zeit nach ihrer Herstellung dimensionsstabil sind, so neigen sie dazu, ihre Stabilität mit der Zeit zu verlieren, da sie durch das aufgenommene Wasser verformbar werden.

Auch die Formteile, die durch Verarbeitung von Mischungen von Stärke mit großen Mengen an Wasser erhalten werden, können oft nicht alle an sie gestellten Anforderungen erfüllen. Problematisch ist insbesondere, dass die so hergestellten Formteile normalerweise das enthaltene Wasser an die Umgebung abgeben. Dadurch werden sie jedoch mit der Zeit spröde. Auch wenn derartige Formteile also eine gute Dimensionsstabilität zeigen können, so können sie diese aufgrund der Versprödung oft nicht über einen längeren Zeitraum halten.

Weiterhin ist auch Gelatine ein Ausgangsmaterial, das im Spritzguss verwendet werden kann. Das Spritzgießen von wasserhaltiger Gelatine in zweiteilige Hartkapseln ist beispielsweise in der DE 34 38 235 C2 beschrieben.

jedoch leiden auch aus Gelatine hergestellte Formteile oft unter der beschriebenen mangelnden Formstabilität, insbesondere auf längere Zeit hin. Nachteilig an Gelatine ist weiterhin die Tatsache, dass Gelatine aus tierischen Abfallprodukten gewonnen wird und daher aufbereitet werden muss, um beispielsweise die Übertragung von Krankheiten zu vermeiden.

Kapseln stellen eine häufige Darreichungsform von Medikamenten dar. Grundsätzlich gibt es zwei verschiedene Arten von Kapseln, Hart- und Weichkapseln. Meistens werden Kapseln aus Gelatine hergestellt. Das am häufigsten eingesetzte Verfahren zur Herstellung von Hartkapseln aus Gelatine ist das Tauchverfahren. Dieses ist beispielsweise in der DE 24 28 397 A1 beschrieben. Bei diesem Tauchverfahren zur Herstellung zweiteiliger Kapseln werden in geeigneter Weise ausgestaltete Tauchstifte in eine wässrige Gelatinelösung getaucht und anschließend aus dieser herausgezogen. Nachteilig am Tauchverfahren ist jedoch die durch den Trocknungsschritt bedingte, langsame Herstellungsgeschwindigkeit und die Tatsache, dass die Ausgestaltungsmöglichkeiten für die Kapselteile begrenzt sind.

Ebenfalls hat es Bestrebungen gegeben, Hartkapseln durch Spritzguss herzustellen. Beispiele für aus Stärke und/oder aus Gelatine hergestellte Hartkapseln sind in den eingangs erwähnten Dokumenten zu finden. Jedoch weisen die nach diesen Herstellungsverfahren produzierten Hartkapseln die oben erwähnten Nachteile, insbesondere die mangelnde Dimensionsstabilität über einen längeren Zeitraum, auf.

WO 94/07953 A1 beschreibt ein Verfahren zur Herstellung einer Schmelze umfassend einen linearen Polyester und veresterte Stärke, vorzugsweise mit einem Substitutionsgrad von mindestens 1,5 und vorzugsweise mit einem Amyloseanteil von mindestens 50 Gew.-%. Die Polymerzusammensetzung wird vermischt unter Einsatz von ausreichend Wärme. Aus der Polymermischung können Formteile geformt werden, wobei eines der möglichen Verfahren hierfür ein Spritzgussverfahren ist. Der Polyester kann in einer Menge von 10 bis 95 Gew.-%, bezogen auf das Gesamtgewicht der Zusammensetzung, enthalten sein. In der allgemeinen Beschreibung wird keine Angabe dazu gemacht, in welcher Menge die veresterte Stärke vorhanden sein kann. In den Beispielen ist das stärkehaltige Polymer immer der Hauptbestandteil der Polymerzusammensetzung. Werden in den Beispielen ein Polyhydroxyalkanoat und ein stärkehaltiges Polymer eingesetzt, enthält die Polymerzusammensetzung jeweils 70 Gew.-% des stärkehaltigen Polymers und 30 Gew.-% des Polyhydroxyalkanoats. Die WO 2014/166938 A1 beschreibt ein Verfahren zur Herstellung einer Polymerzusammensetzung, gekennzeichnet durch das Herstellen eines Gemischs enthaltend vier Komponenten, Homogenisieren dieses Gemischs unter Zuführen von thermischer und/oder mechanischer Energie und Einstellen des Wassergehalts des Gemischs, so dass das Endprodukt einen Wassergehalt kleiner etwa 5 Gew.-% aufweist. Aus der Polymerzusammensetzung können Formteile hergestellt werden. Die Polymerzusammensetzung enthält 10 bis 50 Gew.-% Polyhydroxyalkanoat. Die Beispiele beschreiben Zusammensetzungen mit einer Menge an Polyhydroxyalkanoat von 21,5 bis 29 Gew.-%.

DE 10 2007 050 769 A1 beschreibt ein Verfahren zur Herstellung eines stärkehaltigen polymeren Materials, das 1 bis 75 Gew.-% eines stärkehaltigen Polymers, 10 bis 85 Gew.-% eines Polyesters und 0,01 bis 7 Gew.-% eines epoxidgruppenhaltigen Polymers umfasst und durch Homogenisieren des Gemischs unter Zufuhr von thermischer und/oder mechanischer Energie sowie abschließender Wassereinstellung auf kleiner etwa 12 Gew.-% erhalten wird. Als Polyester kommen auch Polyhydroxyalkanoate in Frage. Aus dem polymeren Material können Formteile, Folien oder Fasern hergestellt werden.

In der WO 2007/063361 A1 wird ein Spritzgussverfahren ausgehend von Zusammensetzungen umfassend Stärke, PLA, Gluten und Silikat beschrieben. Die Zusammensetzungen enthalten Stärke in Mengen von 15 - 55 Gew.-% und PLA in Mengen von 45 - 75 Gew.-%. Die Zusammensetzungen werden homogenisiert und anschließend werden Formteile aus der Zusammensetzung gewonnen.

US 2013/0171383 A1 beschreibt eine Polymerzusammensetzung umfassend eine Mischung aus 50 bis 70 Gew.-% eines Copolyesters enthaltend 1,3-Propandiol, Terephthalsäure und eine lineare, aliphatische Dicarbonsäure, 15 bis 50 Gew.-% Stärke, 6 bis 13 Gew.-% PLA, 0,5 bis 5,0 Gew.-% eines Graftcopolymers aus Polyolefin oder aus Polystyrol. Die Polymerzusammensetzung wird unter Einsatz thermischer und/oder mechanischer Energie homogenisiert. Die Mischung kann in unterschiedliche Formteile geformt werden, unter anderem durch ein Spritzgussverfahren.

Ausgehend vom Stand der Technik bestand eine Aufgabe der Erfindung darin, ein Verfahren bereitzustellen, mit dem stärkehaltige Formteile rein pflanzlichen Ursprungs hergestellt werden können. Die mit dem erfindungsgemäßen Verfahren erhaltenen Formteile sollten insbesondere dimensionsstabil sein, insbesondere über einen längeren Zeitraum hinweg.

Die Aufgabe wird erfindungsgemäß durch ein Verfahren gemäß Anspruch 1, Formteile nach Anspruch 10 sowie eine Hartkapsel nach Anspruch 11 gelöst.

Vorteilhafte Ausgestaltungen der Erfindung sind in den abhängigen Ansprüchen beschrieben und werden nachfolgend wie der allgemeine Erfindungsgedanke im Einzelnen erläutert.

Das erfindungsgemäße Verfahren zur Herstellung eines Formteils umfasst
a. Bereitstellen einer Polymerzusammensetzung, enthaltend 70 bis 99 Gew.-% Polyhydroxyalkanoat und 1 bis 30 Gew.-% stärkehaltiges Polymer, wobei das Polyhydroxyalkanoat der Polymerzusammensetzung sich wiederholende Monomereinheiten der Formel (1) umfasst

   [-O-CHR-CH₂-C(O)-] (1),

   wobei R eine Alkylgruppe der Forme CₙH₂ₙ₊₁ bedeutet und n eine ganze Zahl von 1 bis 15 ist;
b. Homogenisieren der Polymerzusammensetzung unter Einsatz von thermischer und/oder mechanischer Energie;
c. Einbringen der Polymerzusammensetzung in eine Form;
d. Formen eines Formteils in der Form;
e. Entfernen des Formteils aus der Form.

Überraschend wurde festgestellt, dass durch das Vorhandensein eines Polyhydroxyalkanoats in der Mischung eine Polymerzusammensetzung entsteht, die sich gut durch Spritzgießen und/oder durch Umformen, insbesondere Thermoformen, verarbeiten lässt. Die nach diesem Verfahren erhältlichen Produkte sind zudem dimensionsstabil. Weiterhin zeigen diese Produkte eine gute Dimensionsstabilität über einen längeren Zeitraum.

Soweit nicht anders angegeben bezieht sich die Angabe "Gew.-%" auf das Gesamtgewicht der Polymerzusammensetzung.

Gemäß einer weiteren Ausführungsform der Erfindung enthält die Polymerzusammensetzung 74 bis 99 Gew.-% Polyhydroxyalkanoat und 1 bis 26 Gew.-% stärkehaltiges Polymer.

Gemäß einer weiteren Ausführungsform der Erfindung enthält die Polymerzusammensetzung 80 bis 99 Gew.-% Polyhydroxyalkanoat und 1 bis 20 Gew.-% stärkehaltiges Polymer.

Gemäß einer weiteren Ausführungsform der Erfindung enthält die Polymerzusammensetzung 85 bis 99 Gew.-% Polyhydroxyalkanoat und 1 bis 25 Gew.-% stärkehaltiges Polymer.

Gemäß einer weiteren Ausführungsform der Erfindung enthält die Polymerzusammensetzung 89 bis 99 Gew.-% Polyhydroxyalkanoat und 1 bis 11 Gew.-% stärkehaltiges Polymer.

Gemäß einer weiteren Ausführungsform der Erfindung enthält die Polymerzusammensetzung 94 bis 99 Gew.-% Polyhydroxyalkanoat und 1 bis 6 Gew.- % stärkehaltiges Polymer.

Gemäß einer weiteren bevorzugten Ausführungsform der Erfindung enthält die Polymerzusammensetzung neben den Bestandteilen Polyhydroxyalkanoat und stärkehaltiges Polymer andere Bestandteile, in einer Menge von höchstens 10 Gew.-%, insbesondere höchstens 5 Gew.-%, bevorzugt höchstens 4 Gew.-%, weiter bevorzugt höchstens 3 Gew.-%, noch weiter bevorzugt höchstens 2 Gew.-%, am bevorzugtesten höchstens 1 Gew.-%.

Gemäß einer bevorzugten Ausführungsform der Erfindung enthält die Polymerzusammensetzung jeweils weniger als 10 Gew.-%, insbesondere weniger als 5 Gew.-%, bevorzugt weniger als 4 Gew.-%, weiter bevorzugt weniger als 3 Gew.-%, noch weiter bevorzugt weniger als 2 Gew._%, am bevorzugtesten weniger als 1 Gew.- % eines oder mehrerer der Stoffe ausgewählt aus Polyisopren, Polyamide, Polymilchsäure, Polycaprolacton, Cellulose, Celluloseester, Celluloseether, Talkum, Calciumcarbonat und Füllstoffe. Vorzugsweise ist die Polymerzusammensetzung frei von einem oder mehreren der Stoffe ausgewählt aus Polyisopren, Polyamide, Polymilchsäure, Polycaprolacton, Cellulose, Celluloseester, Celluloseether, Talkum, Calciumcarbonat und Füllstoffe.

Das erfindungsgemäße Verfahren weist mehrere Schritte auf. Das Homogenisieren kann durch beliebige, dem auf dem Gebiet der Kunststofftechnik tätigen Fachmann geläufige Maßnahmen erfolgen. Vorzugweise erfolgt das Homogenisieren der Zusammensetzung durch Dispergieren, Rühren, Kneten und/oder Extrudieren. Gemäß einer bevorzugten Ausführungsform der Erfindung wirken bei der Homogenisierung Scherkräfte auf die Zusammensetzung ein. Geeignete Herstellungsverfahren, die auch auf die Herstellung des erfindungsgemäßen polymeren Materials analog anwendbar sind, sind beispielsweise in den Druckschriften EP 0 596 437 B1 und EP 2 203 511 B1 beschrieben. Besonders bevorzugt wird das Homogenisieren der Polymerzusammensetzung in einem Extruder durchgeführt.

Gemäß einer bevorzugten Ausführungsform der Erfindung wird die Polymerzusammensetzung beim Homogenisieren erwärmt. Insbesondere kann das Homogenisieren der Polymerzusammensetzung bei einer Temperatur von 80 bis 220 °C durchgeführt werden.

Vorteilhafterweise wird im erfindungsgemäßen Verfahren die im stärkehaltigen Polymer enthaltene Stärke oder das Stärkederivat beim Homogenisieren im Wesentlichen destrukturiert. Dabei können insbesondere gegebenenfalls noch vorhandene Stärkekörner des stärkehaltigen Polymers destrukturiert werden. Destrukturiert bedeutet dabei, dass die granuläre, kristalline Struktur, die bei nativer Stärke besonders deutlich ausgebildet ist, vollständig oder zumindest weitestgehend zerstört worden ist. Im Falle von funktionalisierter Stärke kann dies aufgrund der Funktionalisierung zumindest teilweise schon erfolgt sein. Die Destrukturierung lässt sich beispielsweise bei Betrachtung von Blendquerschnitten im Rasterelektronenemikroskopleicht feststellen. Alternativ kann die Stärkephase der Polymerzusammensetzung isoliert werden und unter einem Polarisationsmikroskop auf das Vorhandensein von kristallinen Bestandteilen hin untersucht werden.

Von destrukturierter Stärke im Sinne dieser Erfindung sind Fälle zu unterscheiden, in denen native Stärke lediglich unverändert, z.B. als Füllstoff verwendet wird und die granuläre Struktur der Stärke zumindest teilweise erhalten bleibt.

Destrukturierte Stärke kann zweckmäßigerweise in Form von (ggf. vorgefertigter) weichmacherhaltiger thermoplastischer Stärke (TPS) in der erfindungsgemäßen Polymerzusammensetzung vorliegen. Bevorzugt ist die destrukturierte Stärke in der erfindungsgemäßen Polymerzusammensetzung jedoch möglichst weichmacherfrei.

Im erfindungsgemäßen Verfahren können verschiedene stärkehaltige Polymere eingesetzt werden. Vorzugsweise ist das stärkehaltige Polymer ausgewählt aus der Gruppe bestehend aus nativer Stärke, thermoplastischer Stärke, funktionalisierter Stärke, Stärkemonophosphat, Stärkediphosphat, Stärkesulfat, Stärkeester, Stärkeether, Hydroxypropylstärke, Carboxymethylstärke, Stärkeacetat, und Mischungen davon. Für die vorzugsweise Destrukturierung von funktionalisierten Stärken im erfindungsgemäßen Verfahren ist anzumerken, dass sie, soweit sie eingesetzt werden, zumindest teilweise destrukturiert werden, sofern sie noch nicht destrukturiert sind. Insbesondere können gegebenenfalls noch vorhandene Stärkekörner des stärkehaltigen Polymers destrukturiert werden.

Gemäß einer bevorzugten Ausführungsform wird als stärkehaltiges Polymer ein stärkehaltiges Polymerblend eingesetzt, in dem Stärke mit einem thermoplastischen Polymer compoundiert vorliegt. Bevorzugt ist das thermoplastische Polymer ein Polyester, bevorzugt ein auf Dicarbonsäuren und Diolen basierender Polyester, weiter bevorzugt ein statistischer aromatisch-aliphatischer Copolyester, insbesondere basierend auf Adipin- und/oder Sebacinsäure, noch weiter bevorzugt ein Copolyester basierend auf Adipinsäure, Terephthalsäure und Butandiol, am bevorzugtesten Poly(butylenadipat-co-terephthalat) mit einer Glasübergangstemperatur von -25 bis -40 °C und/oder einem Schmelzbereich von 100 bis 120 °C. Bevorzugt enthält der stärkehaltige Polymerblend das thermoplastische Polymer, insbesondere den Polyester, in einer Menge von 50 bis 85 Gew.-%, weiter bevorzugt 60 bis 80 Gew.-%, noch weiter bevorzugt 65 bis 75 Gew.-% und/oder Stärke in einer Menge von 15 bis 50 Gew.-%, weiter bevorzugt 20 bis 40 Gew.-%, noch weiter bevorzugt 25 bis 35 Gew.- %, jeweils bezogen auf das Gesamtgewicht des stärkehaltigen Polymerblends. Ein derartiger stärkehaltiger Polymerblend wird beispielsweise von der Firma Biotec unter dem Handelsnamen Bioplast GF 106/02 vertrieben.

Native Stärke ist vorzugsweise aus Mais, Weizen, Reis, Tapioka und/oder Kartoffeln hergestellt. Vorteilhafterweise weist die native Stärke von 0 bis 100 Gew.-% Amylose und von 100 bis 0 Gew.-% Amylopektin, bezogen auf das Gewicht des Stärkeanteils, auf. Ferner ist es denkbar, dass das stärkehaltige Polymer vor dem Einsatz mit einem Vernetzungsmittel wie Epichlorhydrin, Anyhdriden von Dicarbonsäuren, Di- oder trihalogenierten Kohlenwasserstoffen, di- oder trihalogenierten organischen Säuren, Formaldehyd, Phosphoroxychlorid, Metaphosphat und/oder Acrolein behandelt wurde. Denkbar ist es auch, dass das stärkehaltige Polymer durch vorausgehende Behandlung mit Säuren und/oder Enzymen beispielsweise in Dextrine umgewandelt wurde.

Gemäß einer weiteren Ausführungsform des erfindungsgemäßen Verfahrens enthält die Polymerzusammensetzung weniger als 10 Gew.-%, bevorzugt weniger als 6 Gew.- %, weiter bevorzugt weniger als 4 Gew.-%, bezogen auf das Gesamtgewicht an Stärke und Weichmacher, eines Kohlenstoff-enthaltenden Weichmachers mit einem Molekulargewicht von 500 g/mol oder weniger, insbesondere von 300 g/mol oder weniger, wie Glycerin und/oder Sorbitol. Weitere Beispiele für Kohlenstoffenthaltende Weichmacher sind Arabinose, Lycose, Xylose, Glykose, Fructose, Mannose, Allose, Altrose, Galactose, Gulose, Idose, Inosit, Sorbose, Talit und Monoethoxylat-, Monopropoxylat- und Monoacetat-Derivate hiervon sowie Ethylen, Ethylenglykol, Propylenglykol, Ethylendiglykol, Propylendiglykol, Ethylentriglykol, Propylentriglykol, Polyethylenglykol, Polypropylenglykol, 1,2-Propandiol, 1,3-Propandiol, 1,2-, 1,3-, 1,4-Butandiol, 1,5-Pentandiol, 1,6-, 1,5-Hexandiol, 1,2,6-, 1,3,5-Hexantriol, Neopentylglykol, Trimethylolpropan, Pentaerithritol, Sorbit und deren Acetat-, Ethoxylat- und Propoxylat-derivate.

Um auch ohne Zugabe von Kohlenstoff-haltigen Weichmachern destrukturierte Stärke erhalten zu können, wird native Stärke vorzugsweise zusammen mit mindestens einem Polyhydroxyalkanoat und bei einem ausreichend hohen Wassergehalt unter Einwirkung hoher Scherkräfte und Temperaturen homogenisiert. Das Wasser wird vorzugsweise während oder am Ende des Homogenisierens wieder durch Trocknung entfernt.

Vorteilhafterweise wird im erfindungsgemäßen Verfahren der Wassergehalt der Polymerzusammensetzung vor dem Einbringen der Polymerzusammensetzung in die Form auf weniger als 10 Gew.-%, bevorzugt weniger als 7 Gew.-%, weiter bevorzugt weniger als 5 Gew.-%, bezogen auf das Gesamtgewicht der Polymerzusammensetzung, eingestellt.

Insbesondere können sich hier angegebene Wassergehalte auf das nach dem Homogenisieren und vor dem Einbringen in die Form erhaltene Material beziehen. Zur Bestimmung des Wassergehalts kann eine Probe des homogenisierten Materials in einem verschließbaren Gefäß aufgefangen und dieses luftdicht verschlossen werden. Dabei ist darauf zu achten, dass das Gefäß möglichst vollständig mit dem homogenisierten Material gefüllt ist, damit der Lufteinschluss in dem Gefäß möglichst gering gehalten wird. Nach Abkühlen des verschlossenen Gefäßes kann dieses geöffnet werden, eine Probe genommen und der Wassergehalt beispielsweise mittels Karl-Fischer Titration bestimmt werden.

Vorzugsweise erfolgt die Einstellung des Wassergehalts durch Trocknen während des Homogenisierens. Der Trocknungsvorgang kann beispielsweise durch Entgasen des Gemischs, zweckmäßigerweise durch Abziehen von Wasserdampf während des Homogenisierens, erfolgen.

Die Polymerzusammensetzung im erfindungsgemäßen Verfahren enthält ein Polyhydroxyalkanoat.

Polyhydroxyalkanoate im Sinne der Erfindung sind Polyhydroxyfettsäuren, die Monomere mit einer Kettenlänge von mindestens 4 C-Atomen enthalten.

Bevorzugt umfasst das Polyhydroxyalkanoat der Polymerzusammensetzung sich wiederholende Monomereinheiten der Formel (1)

[-O-CHR-CH₂-C(O)-] (1),

wobei R eine Alkylgruppe der Formel CₙH₂ₙ₊₁ bedeutet und n eine ganze Zahl von 1 bis 6, ist.

Praktische Versuche haben gezeigt, dass es vorteilhaft ist, wenn im erfindungsgemäßen Verfahren das Polyhydroxyalkanoat der Polymerzusammensetzung ausgewählt ist aus der Gruppe bestehend aus Poly(3-hydroxybutanoat), Poly(3-hydroxyvalerat), Poly(3-hydroxyhexanoat), Poly(3-hydroxybutyrat-co-3-hydroxyvalerat), Poly(3-hydroxybutyrat-co-3-hydroxyhexanoat) und Mischungen davon.

Besonders gute Ergebnisse stellen sich ein, wenn das Polyhydroxyalkanoat ausgewählt ist aus Poly-3-hydroxybutyrat (PHB) 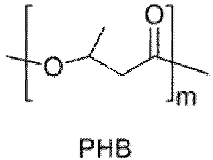 und Poly(3-hydroxybutyrat-co-3-hydroxyhexanoat)(PHBH) 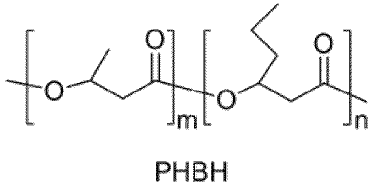 und Mischungen daraus.

Optimale Ergebnisse stellen sich ein, wenn das Verhältnis m:n in obigen Strukturformeln von 95:5 bis 85:15 beträgt, besonders bevorzugt von 90:10 bis 88:12. Vorzugsweise ist im erfindungsgemäßen Verfahren das Polyhydroxyalkanoat der Polymerzusammensetzung ein Copolymer. Gemäß einer besonders bevorzugten Ausführungsform enthält das Polyhydroxyalkanoat PHBH oder besteht daraus. Praktische Versuche haben gezeigt, dass ein PHBH mit einem Molanteil 3-Hydroxyhexanoat von 5 bis 15 Mol%, besonders bevorzugt 7 bis 13 Mol% oder 10 bis 13 Mol%, jeweils bezogen auf die Gesamtmenge PHBH, sehr gute Ergebnisse liefert.

Gemäß einer bevorzugten Ausführungsform der Erfindung wird als Polyhydroxyalkanoat ein PHBH mit einem Molanteil 3-Hydroxyhexanoat von 1 bis 15 Mol%, besonders bevorzugt 2 bis 10 Mol% oder 4 bis 8 Mol% verwendet.

Gemäß einer bevorzugten Ausführungsform ist das Polyhydroxyalkanoat biobasiert und/oder biotechnologisch hergestellt.

Ein besonders bevorzugtes Polyhydroxyalkanoat wird von der Firma Kaneka unter dem Handelsnamen Aonilex^{®} vertrieben.

Das in dem erfindungsgemäßen Verfahren eingesetzte Polyhydroxyalkanoat der Polymerzusammensetzung kann insbesondere ein gewichtsmittleres Molekulargewicht von 60 000 bis 500 000 g/mol, bevorzugt von 120 000 bis 300 000 g/mol, aufweisen.

Methoden zur Bestimmung des Molekulargewichts, insbesondere des gewichtsmittleren Molekulargewichts, sind dem Fachmann bekannt. Das gewichtsmittlere Molekulargewicht von Polyhydroxyalkanoaten kann beispielsweise mittels Gelpermeationschromatographie (GPC) bestimmt werden. Insbesondere kann das Molekulargewicht von Polyhydroxyalkanoaten mittels GPC gegen Polystyrolstandards unter Verwendung einer Mixed-Bed-Säule mit Chloroform als Laufmittel bestimmt werden. Eine für diese Zwecke besonders geeignete Mixed-Bed Säule ist eine solche, welche ein Material aus Styrol-Divinylbenzol enthält.

Die Gelpermeationschromatographie gehört zu den Methoden der Flüssigkeitschromatographie. In der GPC können Moleküle gelöster Stoffe aufgrund ihrer Größe getrennt werden. Die im Laufmittel lösliche Probe wird zur Untersuchung normalerweise in die GPC eingespritzt. Idealerweise ist die Probe nicht nur im Laufmittel löslich, sondern die im Laufmittel gelösten Moleküle der Probe verhalten sich im Laufmittel ähnlich wie die Moleküle der eingesetzten Standards. In der GPC-Säule ist üblicherweise ein poröses Polymer als sogenannte stationäre Phase enthalten, das sich aufgrund von Quervernetzungen im Laufmittel nicht löst. Je nach verwendeter Säule unterscheiden sich die Porosität der stationären Phase sowie ihre Porengrößenverteilung. Mixed-Bed-Säulen verfügen normalerweise über eine breite Porengrößenverteilung und können daher Proben über einen weiten Molekulargewichtsbereich, wie zum Beispiel von 500 bis 1 000 000 g/mol, auftrennen. Kleinere Moleküle können auch in die kleineren Poren der stationären Phase eindringen. Daher steht ihnen beim Durchgang durch die stationäre Phase ein größeres Diffusionsvolumen zur Verfügung als größeren Molekülen. Kleinere Moleküle benötigen daher länger als größere Moleküle, um die stationäre Phase der Säule komplett zu durchlaufen. Man sagt auch, dass die kleineren Moleküle eine längere Retentionszeit haben.

Die Moleküle der zu untersuchenden Probe, welche die stationäre Phase durchlaufen haben, können beispielsweise mit einem Brechungsindexdetektor (Refractive Index Detektor, RI-Detektor) oder ggf. UV-Detektor beobachtet werden. Zur Bestimmung des gewichtsmittleren Molekulargewichts anhand des gemessenen Brechungsindex wird üblicherweise eine Kalibrierung benötigt. Die Kalibrierung kann insbesondere mit Hilfe von Standards durchgeführt werden. Die Standards sind Polymere, wie zum Beispiel Polystyrol, mit einem bekannten Molekulargewicht. Zur Detektion können auch Lichstreuungsdetektoren, insbesondere in Kombination mit einem RI-Detektor, eingesetzt werden. Auf eine Kalibrierung kann dann für die Bestimmung des gewichtsmittleren Molekulargewichts verzichtet werden.
Alternativ kann das gewichtsmittlere Molekulargewicht auch mit Hilfe der Massenspektrometrie, insbesondere der Matrix-unterstützten Laser-Desorptions/Ionisations-Massenspektrometrie (matrix-assisted laser desorption/ionization mass spectrometry, MALDI-MS), bestimmt werden. Bei der MALDI-MS wird die zu untersuchende Probe mit einer Matrix auf einer Unterlage kokristallisiert. Anschließend kann die Probe mit einem Laser zusammen mit der Matrix von der Unterlage desorbiert werden. Dabei wird die Probe normalerweise auch ionisiert. Geeignete Matritzen sind dem Fachmann bekannt. Als Matrix kann insbesondere Sinapinsäure, 2,5-Dihydroxybenzoesäure und/oder alpha-Cyanohydroxyzimtsäure verwendet werden. Nach der Ionisation kann das Gewicht der Probe üblicherweise im Massenspektrometer durch Messung der Flugzeit der ionisierten Probe oder durch Messung der Ablenkung der ionisierten Probe in einem elektrischen Feld und/oder in einem magnetischen Feld bestimmt werden. Auf das Gewicht kann insbesondere ausgehend vom Verhältnis von Masse zu Ladung geschlossen werden.

Das im erfindungsgemäßen Verfahren eingesetzte Polyhydroxyalkanoat der Polymerzusammensetzung kann insbesondere auch einen Schmelzpunkt von 120 bis 200 °C, bevorzugt von 150 bis 180 °C, aufweisen.

Methoden zur Schmelzpunktbestimmung sind dem Fachmann bekannt. Beispielsweise kann der Schmelzpunkt mittels mittels dynamischer Differenzkalorimetrie (Differential Scanning Calorimetry, DSC) bestimmt werden. Wird eine Polymerprobe einem definierten Aufheiz-/Abkühlprogramm unterzogen, so werden Phasenübergänge, welche mit einem Energieumsatz verbunden sind (Glasübergang, Kristallisation, Schmelzen, etc.), in Form exothermer (z.B. Kristallisation) oder endothermer (z.B. Schmelzen) Peaks in DSC Diagrammen aufgezeichnet. Voraussetzung für das Erscheinen eines Peaks in der DSC-Messung ist folglich, dass der Phasenübergang während der Messung, also beim Durchlaufen des Temperaturprogramms, erfolgt. So erzeugt eine amorphe Probe, welche während des Aufheizens kristallisiert, einen exothermen Peak in der Aufheizphase. Abhängig von der Anzahl und Art der Phasenübergänge, die während des Durchlaufens des Temperaturprogramms erfolgen, ergeben sich entsprechend viel exotherme und endotherme Peaks, wobei die Glasübergangstemperatur nicht als Peak, sondern als Stufe zu erkennen ist.

Häufig wird für die Messung ein Temperaturprogramm, das aus einem Aufheiz-Abkühl-Aufheiz-Zyklus besteht, verwendet. Bei diesem Temperaturprogramm wird die Probe zunächst auf einer voreingestellten Anfangstemperatur für 2 bis 5 min equilibriert. Nach dieser ersten Equilibrierphase wird die Probe mit einer gleichbleibenden Aufheizrate bis zu einer voreingestellten ersten Zieltemperatur erhitzt. Häufig wird eine Aufheizrate von 10 °C/min eingesetzt. Bei der ersten Zieltemperatur kann die Probe nochmals für 2 bis 5 min equilibriert und anschließend mit einer konstanten Abkühlrate bis zu einer voreingestellten zweiten Zieltemperatur gekühlt werden. Üblicherweise wird eine Abkühlrate von 10 °C/min eingesetzt. Bei der zweiten Zieltemperatur kann die Probe nochmals für 2 bis 5 min equilibriert und anschließend mit einer gleichbleibenden Aufheizrate bis zu einer voreingestellten dritten Zieltemperatur erhitzt werden, auf welcher die Probe für 2 bis 5 min konstant gehalten wird, bevor die Messung beendet wird. Üblicherweise wird die gleiche Aufheizrate wie bei der ersten Aufheizphase, z.B. 10 °C/min, eingesetzt. Die erste und die dritte Zieltemperatur können gleich oder verschieden sein, ebenso können die Anfangs- und die zweite Zieltemperatur gleich oder verschieden sein.

Im erfindungsgemäßen Verfahren kann die Polymerzusammensetzung noch weitere Bestandteile, insbesondere Nukleierungsmittel, Streckmittel, Gleitmittel, Vernetzungsmittel und/oder Farbstoffe, enthalten. Dabei spielt es keine Rolle, ob diese weiteren Bestandteile der bereitgestellten Polymerzusammensetzung selbst oder der Stärke oder dem Polyhydroxyalkanoat zugesetzt werden.

Gemäß einer Ausführungsform des erfindungsgemäßen Verfahrens enthält die Polymerzusammensetzung Nukleierungsmittel wie beispielsweise Bornitrid (BN), Talk- (Mg₃[Si₄O₁₀(OH)₂]) und Kalk- (CaCO₃) Partikel, Cyclodextrine, Polyvinylalkohol-Partikel, Terbiumoxid, Saccharin, Thymin, Uracil, Orotsäure und/oder Cyanursäure. Die Polymerzusammensetzung kann diese Nukleierungsmittel beispielsweise in einer Menge von 0 bis 10 Gew.-%, bevorzugt von 0,5 bis 5 Gew.-% enthalten. Gemäß einer bevorzugten Ausführungsform des erfindungsgemäßen Verfahrens enthält die Polymerzusammensetzung jedoch weniger als 10 Gew.-%, bevorzugt weniger als 5 Gew.-%, weiter bevorzugt weniger als 3 Gew.-%, noch bevorzugt weniger als 1 Gew.-%, Nukleierungsmittel. Am bevorzugtesten enthält im erfindungsgemäßen Verfahren die Polymerzusammensetzung höchstens Spuren an Nukleierungsmitteln.

In einer weiteren Ausgestaltungsform des erfindungsgemäßen Verfahrens enthält die Polymerzusammensetzung bis zu 90 Gew.-%, vorzugsweise nicht mehr als 30 Gew.-%, bezogen auf das Gesamtgewicht der Polymerzusammensetzung, eines Streckmittels. Als Streckmittel kommen insbesondere Streckmittel ausgewählt aus der Gruppe bestehend aus Kreide, Kalk, Talk, Calciumcarbonat, Aluminiumoxid, Magnesiumoxid, Silikate, Kaolin, Dolomit, Sonnenblumenproteine, Sojabohnenproteine, Baumwollsaatproteine, Erdnussproteine, Rapssaatproteine, Lactose, Gummi Arabicum, Acrylate, Methacrylate, Polycaprolacton, Cellulose, wasserlösliche Cellulosederivate wie Celluloseacetylphthalat, Hydroxypropylcellulose, Hydroxypropylmethylcellulose, Hydroxymethylcellulosephthalat, Hydroxymethylcellulose, Polyvinylalkohol, Polyvinylpyrrolidon, Schellack, Bentonit, Polyvinylacetylphthalat, mit Phthalsäure oder Bernsteinsäure behandelte Gelatine, Polysaccharide wie Agar-Agar und Mischungen davon, in Frage.

Gemäß einer weiteren Ausgestaltungsform des erfindungsgemäßen Verfahrens enthält die Polymerzusammensetzung 0,001 bis 10 Gew.-%, bevorzugt 0,01 bis 2 Gew.-%, bezogen auf das Gesamtgewicht der Polymerzusammensetzung, eines Gleitmittels. Als Gleitmittel können insbesondere Gleitmittel ausgewählt aus der Gruppe bestehend aus Lipiden, insbesondere Glyceriden (Öle und Fette), Glycerinmonostearat, Sorbitanfettsäureester, wie beispielsweise Sorbitanmonostearat, Sorbitanmonolaurat, Sorbitanmonooleat, Sorbitanmonopalmitat, Amiden, insbesondere Fettsäureamiden wie Stearinsäureamid, Behensäureamid, Erucasäureamid, Ölsäureamid, Wachse, Phospholipide, wie ungesättigte und gesättigte pflanzliche Fettsäuren und deren Salze, wie Aluminiumstearat, Calciumstearat, Magnesiumstearat, Zinnstearat, Talkum, Silikone und Mischungen davon, eingesetzt werden.

Als Vernetzungsmittel kommen insbesondere die als mögliche Vernetzungsmittel für Stärke aufgeführten Vernetzungsmittel in Frage.

Gemäß einer weiteren Ausgestaltungsform des erfindungsgemäßen Verfahrens enthält die Polymerzusammensetzung 0,001 bis 10 Gew.-%, bezogen auf das Gesamtgewicht der Polymerzusammensetzung, eines oder mehrerer Farbstoffe. Als Farbstoffe kommen insbesondere Farbstoffe ausgewählt aus der Gruppe bestehend aus Azofarbstoffe, Pigmente wie Eisenoxide, Titaniumdioxide, natürliche Farbstoffe und/oder Mischungen davon in Frage.

In einer besonders bevorzugten Ausführungsform sind sämtliche Bestandteile der Formteile und/oder der Polymerzusammensetzung pharmakologisch akzeptabel und/oder gesundheitlich unbedenklich. Insbesondere können sämtliche Bestandteile der Formteile und/oder der Polymerzusammensetzung essbar und/oder bei Verzehr für den Menschen unschädlich sein.

Das erfindungsgemäße Verfahren kann einstufig durchgeführt und die Polymerzusammensetzung direkt nach dem Homogenisieren in eine Form eingebracht werden. Alternativ kann das Verfahren auch zweistufig durchgeführt werden. Dabei kann zunächst eine Polymerzusammensetzung, enthaltend 1 bis 30 Gew.-% Stärke und 70 bis 99 Gew.-% Polyhydroxyalkanoat, wobei das Polyhydroxyalkanoat der Polymerzusammensetzung sich wiederholende Monomereinheiten der Formel (1) umfasst

[-O-CHR-CH₂-C(O)-] (1),

wobei R eine Alkylgruppe der Forme CₙH₂ₙ₊₁ bedeutet und n eine ganze Zahl von 1 bis 15 ist, bereitgestellt werden, die unter Einsatz von thermischer und/oder mechanischer Energie homogenisiert und als Zwischenprodukt zum Beispiel in Form eines Granulats isoliert werden kann. Insbesondere kann das Homogenisieren durch weitere Merkmale, wie hierin beschrieben, definiert sein. Die Polymerzusammensetzung kann insbesondere durch eines oder mehrere weitere Merkmale wie, hierin beschrieben, definiert sein. Dieses isolierte Granulat kann dann in einer zweiten Stufe erhitzt und in eine Form eingebracht werden, ein Formteil kann geformt und aus der Form entfernt werden.

Gemäß einer beispielhaften Ausgestaltung des zweistufigen Verfahrens wird die homogenisierte Polymerzusammensetzung enthaltend 1 bis 30 Gew.-% Stärke und 70 bis 99 Gew.-% Polyhydroxyalkanoat, wobei das Polyhydroxyalkanoat der Polymerzusammensetzung sich wiederholende Monomereinheiten der Formel (1) umfasst [-O-CHR-CH₂-C(O)-] (1), wobei R eine Alkylgruppe der Forme CₙH₂ₙ₊₁ bedeutet und n eine ganze Zahl von 1 bis 15 ist, zunächst zu einer Platte oder einer Folie, beispielsweise einer Flachfolie, verarbeitet. Derartige Folien oder Platten können beispielsweise durch Extrusion, zum Beispiel durch eine Breitschlitzdüse, hergestellt werden. Die Folien oder Platten können entweder direkt mit der compoundierten Mischung hergestellt werden oder das isolierte Granulat enthaltend 1 bis 30 Gew.-% Stärke und 70 bis 99 Gew.-% Polyhydroxyalkanoat, wobei das Polyhydroxyalkanoat der Polymerzusammensetzung sich wiederholende Monomereinheiten der Formel (1) umfasst [-O-CHR-CH₂-C(O)-](1), wobei R eine Alkylgruppe der Forme CₙH₂ₙ₊₁ bedeutet und n eine ganze Zahl von 1 bis 15 ist, kann vor dem Einbringen in die Form in Schritt c. des erfindungsgemäßen Verfahrens zu den Folien oder Platten als Zwischenprodukt weiterverarbeitet werden. Diese Platten oder Folien können dann in einer zweiten Stufe in eine Form eingebracht werden, ein Formteil kann geformt und aus der Form entfernt werden. Die als Zwischenprodukte hergestellten Platten oder Folien können unterschiedliche Dicken aufweisen. Platten können beispielsweise eine Dicke von 1 bis 20 mm, insbesondere von 1 bis 18 mm oder 2 bis 15 mm aufweisen. Folien, insbesondere Flachfolien, können beispielsweise eine Dicke von 0,1 bis 1,5 mm, insbesondere von 0,2 bis 1,3 mm aufweisen.

Gemäß einer Ausführungsform des erfindungsgemäßen Verfahrens wird die Polymerzusammensetzung, insbesondere in Platten- oder Folienform, in den Schritten c. und d. durch Umformen, bevorzugt durch Thermoformen, insbesondere durch Biege-, Zieh-, Streck- und/oder Druckformen, umgeformt. Dies kann insbesondere auch als Tiefziehen bezeichnet werden. Geeignete Verfahrensweisen zum Umformen sind dem Fachmann bekannt. Dies erlaubt eine besonders wirtschaftliche Durchführung des Verfahrens. Dabei kann die Platte oder Folie ferner vor dem Einbringen in die Form im Schritt c. auch mit einem oder mehreren weiteren Materialien beschichtet werden. Hierdurch kann eine Mehrschichtfolie oder eine Mehrschichtplatte entstehen. Die Beschichtung mit einem oder mehreren weiteren Materialien kann auch gleichzeitig mit der Herstellung der Platte oder Folie, beispielsweise durch Coextrusion, erfolgen. Auf diese Weise können auch die Eigenschaften des Formteils genau eingestellt werden.

Für das Umformen kann die Platte oder Folie insbesondere erhitzt wird. Die Platte oder Folie kann durch Ober- und/oder Unterhitze erhitzt werden. Das Erhitzen kann durch Heizstrahler, beispielsweise durch Hochtemperatur-Keramik-Strahler erfolgen. Dabei können Temperaturen von 200 bis 800 °C, insbesondere von 300 bis 700 °C oder von 400 bis 600 °C, auf die Platte oder Folie einwirken. Die Aufheizzeit kann beispielsweise von 5 bis 25 Sekunden, insbesondere von 8 bis 20 Sekunden betragen.

Das Umformen der Platte oder Folie, insbesondere nach dem Erhitzen, kann durch Biegen, Ziehen, Strecken und/oder Drücken erreicht werden. Das Ziehen kann durch das Anlegen eines Unterdrucks relativ zu einem Bezugsdruck in der Form erreicht werden. Als Bezugsdruck für den Unterdruck kann der Umgebungsdruck oder ein anderer Druck verwendet werden, bevorzugt wird ein Bezugsdruck von 1 bar verwendet. Beispielweise kann zum Umformen durch Ziehen in der Form ein Unterdruck von -0,1 bis -0,99 bar, insbesondere von -0,3 bis -0,95 bar, jeweils relativ zu einem Bezugsdruck, bevorzugt von 1 bar, angelegt werden.

Das Drücken kann durch das Anlegen eines Überdrucks relativ zu einem Bezugsdruck in der Form erreicht werden. Als Bezugsdruck für den Unterdruck kann der Umgebungsdruck oder ein anderer Druck verwendet werden, bevorzugt wird ein Bezugsdruck von 1 bar verwendet. Beispielweise kann zum Umformen durch Drücken in der Form ein Überdruck von 0,1 bis 2 bar, insbesondere von 0,3 bis 1 bar, jeweils relativ zu einem Bezugsdruck, bevorzugt von 1 bar, angelegt werden.

Das zum Umformen verwendete Werkzeug kann eine oder mehrere Kavitäten aufweisen.

Demgemäß werden gemäß einer bevorzugten Ausführungsform der Erfindung die Formteile in den Schritten c. und d. durch Umformen, insbesondere durch Thermoformen, geformt.

Gemäß einer besonders bevorzugten Ausführungsform des erfindungsgemäßen Verfahrens enthält die Polymerzusammensetzung 74 bis 99 Gew.-%, insbesondere 89 bis 99 Gew.-%, PHBH (Poly(3-hydroxybutyrat-co-3-hydroxyhexanoat)) mit einem Molanteil 3-Hydroxyhexanoat von 5 bis 15 Mol% als Polyhydroxyalkanoat und 1 bis 26 Gew.-%, insbesondere 1 bis 11 Gew.-% stärkehaltiges Polymer und weniger als 5 Gew.-%, bevorzugt weniger als 4 Gew.-%, weiter bevorzugt weniger als 3 Gew.-%, noch weiter bevorzugt weniger als 2 Gew._%, am bevorzugtesten weniger als 1 Gew.- % eines oder mehrerer der Stoffe ausgewählt aus Polyisopren, Polyamide, Polymilchsäure, Polycaprolacton, Cellulose, Celluloseester, Celluloseether, Talkum, Calciumcarbonat und Füllstoffe, wobei die Formteile in den Schritten c. und d. durch Umformen, insbesondere durch Thermoformen, geformt werden.

Gemäß einer Ausgestaltungsform des erfindungsgemäßen Verfahrens wird die Polymerzusammensetzung in den Schritten c. und d. durch Spritzgießen geformt. Dadurch kann das Verfahren sehr wirtschaftlich durchgeführt werden. Geeignete Verfahrensweisen zum Spritzgießen sind dem Fachmann bekannt. Beispielsweise sind geeignete Verfahrensweisen zum Spritzgießen von stärkehaltigen Polymerzusammensetzungen, die auch analog im erfindungsgemäßen Verfahren angewendet werden können, in der EP 0 118 240 A2, in der US 4,738,724 und in der DE 34 38 235 C2 beschrieben.

Gemäß einer bevorzugten Ausgestaltungsform des erfindungsgemäßen Verfahrens wird die Polymerzusammensetzung in Schritt c. mit einem Druck von mehr als 1 bar, bevorzugt von mehr als 100 bar, in die Form eingespritzt. Weiter bevorzugt wird die Polymerzusammensetzung mit einem Druck von 150 bis 3 000 bar in die Form eingespritzt.

Der in Schritt c. anzuwendende Druck kann von mehreren Faktoren abhängen. Insbesondere kann der Druck von der Anzahl an Kavitäten, in die eingespritzt wird, abhängen. Eine größere Anzahl an Kavitäten erfordert normalerweise einen höheren Druck. Weiterhin kann der Druck von den Spritzwegen, insbesondere von der Länge und/oder der Geometrie der Spritzwege, abhängen. Längere Spritzwege erfordern üblicherweise einen höheren Druck. Weiterhin kann der Druck auch von der Viskosität der Polymerzusammensetzung abhängen. Eine höhere Viskosität erfordert normalerweise einen höheren Druck.

Gemäß einer weiteren Ausführungsform des erfindungsgemäßen Verfahrens wird die Polymerzusammensetzung in Schritt c. bei einer Temperatur der Polymerzusammensetzung von mehr als 23 °C, bevorzugt von mehr als 50 °C, in die Form eingespritzt. Weiter bevorzugt wird die Polymerzusammensetzung in Schritt c. bei einer Temperatur der Polymerzusammensetzung von 80 bis 200 °C in die Form eingespritzt.

Insbesondere kann die Temperatur der Form, in die die Polymerzusammensetzung im eingebracht wird, von 10 bis 100 °C, bevorzugt von 20 bis 90 °C, betragen.

Gemäß einer weiteren Ausführungsform des Verfahrens wird das Formteil, das beispielsweise durch Umformen oder durch Spritzgießen erhältlich ist, in einem weiteren Schritt nach dem Entfernen aus der Form beschichtet. Beispielsweise kann das Formteil durch Beschichten mit einer Barriere gegen Gase, insbesondere gegen Sauerstoff, versehen werden. Als Beschichtungsmittel können dabei sowohl organische Materialien wie zum Beispiel hocharmorpher Polyvinylalkhohol als auch anorganische Materialien wie zum Beispiel Metalle, insbesondere Aluminium, oder siliciumoxidhaltige Materialen verwendet werden. Vorteilhafterweise weist die Beschichtung eine Dicke von 0,1 bis 100 µm, insbesondere 1 bis 50 µm auf.

Die Erfindung betrifft ferner Formteile, die nach einem erfindungsgemäßen Verfahren hergestellt wurden.

Insbesondere eignet sich das erfindungsgemäße Verfahren zur Herstellung von Hartkapseln, bevorzugt von Hartkapseln für pharmazeutische Zwecke.

Die Erfindung betrifft ferner Hartkapseln, umfassend einen dimensionsstabilen Kapselkörper und eine dimensionsstabile Kapselkappe mit jeweils mindestens einer Seitenwand und einem geschlossenen Ende, wobei der Kapselkörper und/oder die Kapselkappe nach einem erfindungsgemäßen Verfahren hergestellt wurden. Insbesondere sind die erfindungsgemäßen Hartkapseln zweiteilig.

Gemäß einer weiteren Ausführungsform weist die Hartkapsel eine glatte Oberfläche auf. Dies kann das Herunterschlucken der Kapsel erleichtern.

Gemäß einer bevorzugten Ausführungsform der Erfindung lassen sich Kapselkörper und Kapselkappe koaxial ineinanderschieben. Dies erlaubt ein einfaches Verschließen der Kapsel.

Gemäß einer weiteren Ausführungsform der Erfindung weisen Kapselkörper und Kapselkappe in der jeweils mindestens einen Seitenwand nahe ihrem offenen Ende eine ineinander passende und nach dem Zusammenschieben der Kapselteile eine trennsichere Verbindung ergebende Verschlusseinrichtung auf. Auf diese Weise kann sichergestellt werden, dass die Kapsel nach dem Befüllen und Verschließen nicht wieder geöffnet werden kann.

Verschiedene Verschlusseinrichtungen können verwendet werden. Insbesondere kann die Kapselkappe eine Rille und der Kapselkörper eine dazu passende Erhebung, die in die Rille der Kapselkappe einrasten kann, aufweisen. Weitere Ausgestaltungsformen sind dem Fachmann bekannt und insbesondere in der DE 34 38 235 C2 sowie in der US 4,738,724 beschrieben.

Gemäß einer weiteren Ausführungsform der Erfindung umfasst der Kapselkörper mehr als ein Kompartiment.

Durch geeignete Anpassung der Polymerzusammensetzung ist es insbesondere möglich, das Auflösungs- und/oder das Retardverhalten der erfindungsgemäßen Hartkapseln zu beeinflussen. So kann durch geeignete Kombination der Bestandteile erreicht werden, dass die Hartkapseln beispielsweise für bis zu 2 Stunden magensaftresistent sind, sich jedoch in Dünndarmsaft innerhalb von 30 Minuten auflösen können.

Ferner eignet sich das erfindungsgemäße Verfahren zur Herstellung von Formteilen, die besonders gut als Behälter oder Kapseln für Kaffee in den entsprechenden Kaffeezubereitungssystemen geeignet sind. Eine derartige besonders bevorzugte Ausführungsform der erfindungsgemäßen Formteile wird nachstehend unter Bezugnahme auf die folgenden Zeichnungen näher beschrieben.
- Fig. 1: zeigt eine schematische Darstellung einer besonders bevorzugten Ausführungsform der erfindungsgemäßen Formteile in Aufsicht.
- Fig. 2: zeigt eine schematische Darstellung einer besonders bevorzugten Ausführungsform der erfindungsgemäßen Formteile im Querschnitt.

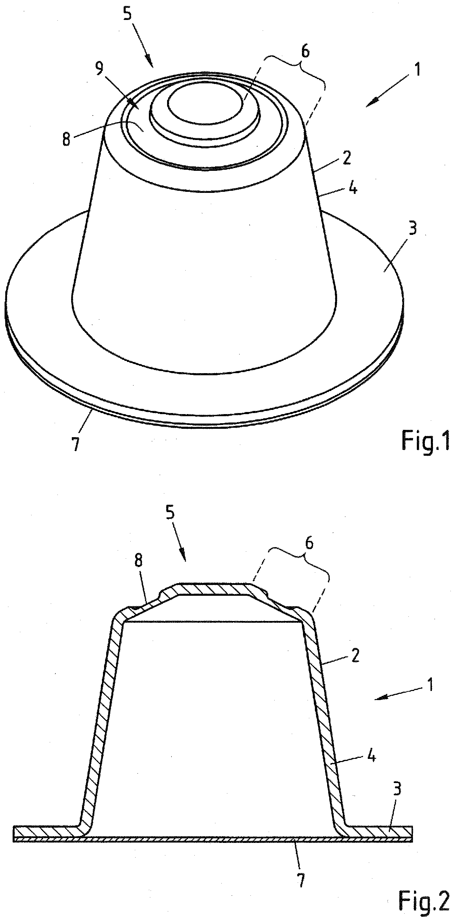

Figur 1 zeigt eine Aufsicht auf eine besonders bevorzugte Ausführungsform 1 der erfindungsgemäßen Formteile, umfassend einen frustokonischen Körper 2 mit einem Rand 3, einer Seitenwand 4, einer Einlasswand 5, wobei die Einlasswand 5 einen flachen oder konvexen Teil 6 umfassen kann, und einer tiefer gelegenen Zuführungswand 7, die den Rand 3 versiegelt, wobei die flache oder konvexe Portion 6 eine zurückgezogene oder reliefartige Struktur 8 aufweist, wobei diese zurückgezogene oder reliefartige Struktur 8 das Durchstoßen dieser Struktur mit Klingen, die zum Injektionsgerät gehören, erleichtert und sich auf einem im Wesentlichen kreisförmigen Pfad 9 befindet, dessen Durchmesser durch den Durchmesser der ebenfalls kreisförmig angeordneten Klingen definiert ist, wobei insbesondere der frustokonische Körper 2 des Formteils durch das erfindungsgemäße Verfahren erhältlich ist.

Figur 2 zeigt einen Querschnitt einer besonders bevorzugten Ausführungsform 1 der erfindungsgemäßen Formteile, umfassend einen frustokonischen Körper 2 mit einem Rand 3, einer Seitenwand 4, einer Einlasswand 5, wobei die Einlasswand 5 einen flachen oder konvexen Teil 6 umfassen kann, und einer tiefer gelegenen Zuführungswand 7, die den Rand 3 versiegelt, wobei die flache oder konvexe Portion 6 eine zurückgezogene oder reliefartige Struktur 8 aufweist, wobei diese zurückgezogene oder reliefartige Struktur 8 das Durchstoßen dieser Struktur mit Klingen, die zum Injektionsgerät gehören, erleichtert und sich auf einem im Wesentlichen kreisförmigen Pfad befindet, dessen Durchmesser durch den Durchmesser der ebenfalls kreisförmig angeordneten Klingen definiert ist, wobei insbesondere der frustokonische Körper 2 des Formteils durch das erfindungsgemäße Verfahren erhältlich ist.

Vorteilhafterweise versiegelt die tiefer gelegene Zuführungswand 7 den Rand 3 der Kapsel im Wesentlichen gasdicht. Zudem kann insbesondere der frustokonische Körper 2 und/oder die Zuführungswand 7 der Ausführungsform 1 beschichtet sein, vorteilhafterweise mit einer gasdichten Beschichtung, zum Beispiel durch Metallisieren, wie oben beschrieben. Durch eine gasdichte Verpackung wird die Haltbarkeit von in der Kapsel befindlichen, oxidierbaren Stoffen verlängert.

Gemäß einer besonders bevorzugten Ausgestaltungsform der erfindungsgemäßen Formteile sind sowohl der frustokonische Körper 2 und die tiefer gelegene Zuführungswand 7 gemäß EN 13432 biologisch abbaubar, bevorzugt vollständig biologisch abbaubar, so dass diese Ausgestaltungsform der erfindungsgemäßen Formteile in ihrer Gesamtheit biologisch abbaubar ist.

Das Prinzip der Erfindung soll im Folgenden an Beispielen näher erläutert werden.

Für das Ausführungsbeispiel wurden folgende Materialien verwendet: Poly(hydroxybutyrat-co-hexanoat), PHBH (AONILEX X 151 A, KANEKA); native Kartoffelstärke (EMSLANDSTÄRKE); stärkehaltiger Polymerblend, GF106 (BIOPLAST GF106/02, BIOTEC); thermoplastische Stärke, TPS (BIOPLAST TPS, BIOTEC)

### Beispiel 1 (zweistufiges Verfahren):

Mit einem Zweiwellenextruder (Gleichläufer) des Typs *Werner & Pfleiderer (COPERION)* ZSK 40, Schneckendurchmesser 40 mm, L/D = 42, wurde folgende Rezeptur A compoundiert (dosierte Anteile in Massenprozent):

**Tab. 1: Rezeptur (nicht erfindungsgemäß)**

| | **A** |
|---|---|
| PHBH | 69,8 |
| Stärke | 30,2 |

Dabei wurden folgende Compoundierparameter eingehalten:

**Tab.2: Temperaturprofil ZSK 40**

| Zone 1 | Zone 2 | Zone 3 | Zone 4 | Zone 5 | Zone 6 | Zone 7 | Zone 8 | Düse |
|---|---|---|---|---|---|---|---|---|
| 25 °C | 170 °C | 170 °C | 160 °C | 160 °C | 160 °C | 160 °C | 160 °C | 150 °C |

| | |
|---|---|
| Schmelzetemperatur bei Düsenaustritt: | 155 °C |
| Drehzahl: | 140 min⁻¹ |
| Durchsatz: | 40 kg/h |
| Entgasung: | aktiv (Vakuum, Zone 7) |
| Wassergehalt: | kleiner 1 Gew.-% |

(gemessen nach dem Austritt aus dem Extruder)

Die Polymerzusammensetzung wurde zunächst in Form eines Granulats isoliert.

Das Granulat wurde anschließend in einer Spritzgussanlage des Typs ARBURG ALLROUNDER 270 M zu zweiteiligen Hartkapseln verarbeitet.

Dabei wurden folgende Verarbeitungsparameter eingestellt:

**Tab. 3: Verarbeitungsparameter Spritzguss**

| Zone 1 | Zone 2 | Zone 3 | Zone 4 |
|---|---|---|---|
| 25°C | 160°C | 160°C | 160°C |

| | |
|---|---|
| Werkzeugtemperatur: | 45°C |
| Zykluszeit: | 30 s |
| Druck: | 300 bar |

Die erhaltenen zweiteiligen Hartkapseln zeichneten sich durch eine glatte Oberfläche und eine ausgezeichnete Dimensionsstabilität aus. Insbesondere ließ sich die erhaltene Hartkapsel gut verschließen.

### Beispiel 2 (zweistufiges Verfahren)

Mit einem Zweiwellenextruder (Gleichläufer) des Typs *Werner & Pfleiderer* (*COPERION*) ZSK 40, Schneckendurchmesser 40 mm, L/D = 42, wurden folgende Rezepturen B bis I compoundiert (dosierte Anteile in Massenprozent):

**Tab. 4: Rezepturen**

| | **B** | **C** | **D** | **E** | **F** | **G** | **H** | **I** |
|---|---|---|---|---|---|---|---|---|
| PHBH | 98,5 | 94,5 | 89,5 | 74,5 | 98,5 | 94,5 | 89,5 | 74,5 |
| GF106 | 1,5 | 5,5 | 10,5 | 25,5 | - | - | - | - |
| TPS | - | - | - | - | 1,5 | 5,5 | 10,5 | 25,5 |

Dabei wurden folgende Compoundierparameter eingehalten:

**Tab.5: Temperaturprofil ZSK 40**

| Rezeptur | Zone 1 | Zone 2 | Zone 3 | Zone 4 | Zone 5 | Zone 6 | Zone 7 | Zone 8 | Düse |
|---|---|---|---|---|---|---|---|---|---|
| B, F | 25 °C | 170 °C | 170 °C | 170 °C | 170 °C | 170 °C | 165 °C | 165 °C | 155 °C |
| C, G | 25 °C | 170 °C | 170 °C | 170 °C | 165 °C | 165 °C | 165 °C | 160 °C | 150 °C |
| D, H | 25 °C | 170 °C | 170 °C | 165 °C | 165°C | 165 °C | 160 °C | 160 °C | 150 °C |
| E, I | 25 °C | 170 °C | 170 °C | 165 °C | 160 °C | 160 °C | 160 °C | 160 °C | 150 °C |

| | |
|---|---|
| Schmelzetemperatur bei Düsenaustritt: | 153 °C bis 158 °C |
| Drehzahl: | 140 min⁻¹ |
| Durchsatz: | 40 kg/h |
| Entgasung: | aktiv (Vakuum, Zone 7) |
| Wassergehalt: | kleiner 1 Gew.% (gemessen nach dem Austritt aus dem Extruder) |

Die Polymerzusammensetzungen B bis I wurden zunächst in Form von Granulaten isoliert.

Die Granulate B bis I wurden anschließend mit einem Einwellenextruder des Typs *COLLIN 30 (DR. COLLIN),* Schneckendurchmesser 30 mm, L/D = 33, aufgeschmolzen und mittels einer MABAG Breitschlitzdüse mit einer Schlitzbreite von 30 cm zu Flachfolien mit einer Dicke von jeweils 0,75 mm weiterverarbeitet.

Dabei wurden folgende Verarbeitungsparameter für die Granulate B bis I eingestellt:

**Tab.6: Temperaturprofil COLLIN 30**

| Zone 1 | Zone 2 | Zone 3 | Zone 4 | Düse |
|---|---|---|---|---|
| 165 °C | 170 °C | 170 °C | 170 °C | 165 °C |

| | |
|---|---|
| Drehzahl: | 53 min⁻¹ |
| Breitschlitzdüsenspalt: | 30 cm |
| Schmelzetemperatur bei Düsenaustritt: | 157 °C |
| Foliendicke: | 750 µm |

Die Flachfolien wurden anschließend mit einer ILLIG KFG37 Plattenformmaschine zu Kaffekapseln umgeformt. Dafür wurden die Flachfolien in kleinere Stücke geschnitten und diese jeweils für 15 Sekunden mit Hitzestrahlern einer Oberhitze von 500 °C ausgesetzt und anschließend in der Form bei einem Unterdruck von -0,8 bar, relativ zu einem Bezugsdruck von 1 bar, umgeformt, wodurch die Kaffekapseln gebildet wurden.

## Patentansprüche

1. Verfahren zur Herstellung eines Formteils, umfassend:
a. Bereitstellen einer Polymerzusammensetzung, enthaltend 70 bis 99 Gew.-% Polyhydroxyalkanoat und 1 bis 30 Gew.-% stärkehaltiges Polymer, wobei das Polyhydroxyalkanoat der Polymerzusammensetzung sich wiederholende Monomereinheiten der Formel (1) umfasst
[-O-CHR-CH₂-C(O)-] (1),
wobei R eine Alkylgruppe der Formel CₙH₂ₙ₊₁ bedeutet und n eine ganze Zahl von 1 bis 15 ist;
b. Homogenisieren der Polymerzusammensetzung unter Einsatz von thermischer und/oder mechanischer Energie;
c. Einbringen der Polymerzusammensetzung in eine Form;
d. Formen eines Formteils in der Form;
e. Entfernen des Formteils aus der Form.

2. Verfahren nach Anspruch 1, **dadurch gekennzeichnet, dass** das Homogenisieren der Polymerzusammensetzung bei einer Temperatur von 80 bis 220 °C durchgeführt wird; und/oder dass das Homogenisieren der Polymerzusammensetzung in einem Extruder durchgeführt wird.

3. Verfahren nach einem der vorstehenden Ansprüche, **dadurch gekennzeichnet, dass** die im stärkehaltigen Polymer enthaltene Stärke oder funktionalisierte Stärke beim Homogenisieren im Wesentlichen destrukturiert wird.

4. Verfahren nach einem der vorstehenden Ansprüche, **dadurch gekennzeichnet, dass** das stärkehaltige Polymer ausgewählt ist aus der Gruppe bestehend aus nativer Stärke, thermoplastischer Stärke, funktionalisierter Stärke, Stärkemonophosphat, Stärkediphosphat, Stärkesulfat, Stärkeester, Stärkeether, Hydroxypropylstärke, Carboxymethylstärke, Stärkeacetat und Mischungen davon.

5. Verfahren nach einem der vorstehenden Ansprüche, **dadurch gekennzeichnet, dass** die Polymerzusammensetzung weniger als 10 Gew.-%, insbesondere weniger als 6 oder weniger als 4 Gew.-%, bezogen auf das Gesamtgewicht an Stärke und Weichmacher, eines Kohlenstoff-enthaltenden Weichmachers mit einem Molekulargewicht von 500 g/mol oder weniger, insbesondere von 300 g/mol oder weniger, wie Glycerin und/oder Sorbitol, enthält.

6. Verfahren nach einem der vorstehenden Ansprüche, **dadurch gekennzeichnet, dass** der Wassergehalt der Polymerzusammensetzung vor dem Einbringen der Polymerzusammensetzung in die Form auf weniger als 10 Gew.-%, insbesondere weniger als 7 oder weniger als 5 Gew.-%, bezogen auf das Gesamtgewicht der Polymerzusammensetzung, eingestellt wird.

7. Verfahren nach einem der vorstehenden Ansprüche, **dadurch gekennzeichnet, dass** n eine ganze Zahl von 1 bis 6, ist; und/oder dass das Polyhydroxyalkanoat der Polymerzusammensetzung ausgewählt ist aus der Gruppe bestehend aus Poly(3-hydroxybutanoat), Poly(3-hydroxyvalerat), Poly(3-hydroxyhexanoat), Poly(3-hydroxybutyrat-co-3-hydroxyvalerat), Poly(3-hydroxybutyrat-co-3-hydroxyhexanoat) und Mischungen davon; und/oder dass das Polyhydroxyalkanoat der Polymerzusammensetzung ein Copolymer ist, und/oder dass das Polyhydroxyalkanoat der Polymerzusammensetzung ein gewichtsmittleres Molekulargewicht von 60 000 bis 500 000 g/mol, insbesondere von 120 000 bis 300 000 g/mol, aufweist; und/oder dass das Polyhydroxyalkanoat der Polymerzusammensetzung einen Schmelzpunkt von 120 bis 200 °C, insbesondere von 150 bis 180 °C, aufweist.

8. Verfahren nach einem der vorstehenden Ansprüche, **dadurch gekennzeichnet, dass** das Formteil in den Schritten c. und d. durch Spritzgießen geformt wird.

9. Verfahren nach einem der vorstehenden Ansprüche, **dadurch gekennzeichnet, dass** die Polymerzusammensetzung in Schritt c. mit einem Druck von mehr als 1 bar, insbesondere mehr als 100 bar, in die Form eingespritzt wird; und/oder dass die Polymerzusammensetzung in Schritt c. mit einem Druck von 150 bis 3000 bar in die Form eingespritzt wird; und/oder dass die Polymerzusammensetzung in Schritt c. bei einer Temperatur der Polymerzusammensetzung von mehr als 23 °C, insbesondere von mehr als 50 °C, in die Form eingespritzt wird; und/oder dass die Polymerzusammensetzung in Schritt c. bei einer Temperatur der Polymerzusammensetzung von 80 bis 200 °C in die Form eingespritzt wird.

10. Formteil erhältlich nach einem Verfahren gemäß einem der Ansprüche 1 bis 9.

11. Hartkapsel umfassend einen dimensionsstabilen Kapselkörper und eine dimensionsstabile Kapselkappe mit jeweils mindestens einer Seitenwand und einem geschlossenen Ende, wobei der Kapselkörper und/oder die Kapselkappe nach einem Verfahren gemäß einem der Ansprüche 1 bis 9 hergestellt sind.

12. Hartkapsel nach Anspruch 11, **dadurch gekennzeichnet, dass** sich der Kapselkörper und die Kapselkappe koaxial ineinanderschieben lassen; und/oder dass der Kapselkörper und die Kapselkappe in der jeweils mindestens einen Seitenwand nahe ihrem offenen Ende eine ineinander passende und/oder nach dem Zusammenschieben der Kapselteile trennsichere Verbindung ergebende Verschlusseinrichtung aufweisen; und/oder dass der Kapselkörper mehr als ein Kompartiment umfasst.

13. Formteil (1) nach Anspruch 10 umfassend einen frustokonischen Körper (2) mit einem Rand (3), einer Seitenwand (4) einer Einlasswand (5), wobei die Einlasswand (5) einen flachen oder konvexen Teil (6) umfasst, und eine tiefer gelegene Zuführungswand (7), die den Rand (3) versiegelt, wobei die flache oder konvexe Portion (6) eine zurückgezogene oder reliefartige Struktur (8) aufweist, wobei diese zurückgezogene oder reliefartige Struktur (8) das Durchstoßen dieser Struktur mit Klingen, die zum Injektionsgerät gehören, erleichtert und sich auf einem im Wesentlichen kreisförmigen Pfad (9) befindet, dessen Durchmesser durch den Durchmesser der ebenfalls kreisförmig angeordneten Klingen definiert ist, wobei der frustokonische Körper (2) nach einem Verfahren gemäß einem der Ansprüche 1 bis 9 erhältlich ist.

## Claims

1. Method for producing a molded part, comprising:
a. providing a polymer composition containing 70 to 99 wt.% polyhydroxyalkanoate and 1 to 30 wt.% starch-containing polymer, wherein the polyhydroxyalkanoate of the polymer composition comprises repeating monomer units of formula (1)
[-O-CHR-CH₂-C(O)-] (1),
wherein R denotes an alkyl group of formula CₙH₂ₙ₊₁ and n is an integer from 1 to 15;
b. homogenizing the polymer composition using thermal and/or mechanical energy;
c. introducing the polymer composition into a mold;
d. molding a molded part in the mold; and
e. removing the molded part from the mold.

2. Method according to any of the preceding claims, **characterized in that** the polymer composition is homogenized at a temperature of 80 to 220 °C and/or the polymer composition is homogenized in an extruder.

3. Method according to any of the preceding claims, **characterized in that** the starch or functionalized starch contained in the starch-containing polymer is substantially destructured during homogenization.

4. Method according to any of the preceding claims, **characterized in that** the starch-containing polymer is selected from the group consisting of native starch, thermoplastic starch, functionalized starch, starch monophosphate, starch diphosphate, starch sulfate, starch ester, starch ether, hydroxypropyl starch, carboxymethyl starch, starch acetate, and mixtures thereof.

5. Method according to any of the preceding claims, **characterized in that** the polymer composition contains less than 10 wt.%, in particular less than 6 or less than 4 wt.%, based on the total weight of starch and plasticizer, of a carbon-containing plasticizer having a molecular weight of 500 g/mol or less, in particular 300 g/mol or less, such as glycerol and/or sorbitol.

6. Method according to any of the preceding claims, **characterized in that** the water content of the polymer composition before the polymer composition is introduced into the mold is set to less than 10 wt.%, in particular less than 7 or less than 5 wt.%, based on the total weight of the polymer composition.

7. Method according to any of the preceding claims, **characterized in that** n is an integer from 1 to 6, and/or the polyhydroxyalkanoate of the polymer composition is selected from the group consisting of poly(3-hydroxybutanoate), poly(3-hydroxyvalerate), poly(3-hydroxyhexanoate), poly(3-hydroxybutyrate-co-3-hydroxyvalerate), poly(3-hydroxybutyrate-co-3-hydroxyhexanoate), and mixtures thereof and/or the polyhydroxyalkanoate of the polymer composition is a copolymer and/or the polyhydroxyalkanoate of the polymer composition has a weight average molecular weight of 60,000 to 500,000 g/mol, in particular of 120,000 to 300,000 g/mol, and/or the polyhydroxyalkanoate of the polymer composition has a melting point of 120 to 200 °C, in particular of 150 to 180 °C.

8. Method according to any of the preceding claims, **characterized in that** the molded part is molded by injection molding in steps c. and d.

9. Method according to any of the preceding claims, **characterized in that** the polymer composition is injected into the mold in step c. at a pressure of more than 1 bar, in particular more than 100 bar, and/or the polymer composition is injected into the mold in step c. at a pressure of 150 to 3,000 bar and/or the polymer composition is injected into the mold in step c. at a temperature of the polymer composition of more than 23 °C, in particular more than 50 °C, and/or the polymer composition is injected into the mold in step c. at a temperature of the polymer composition of 80 to 200 °C.

10. Molded part obtainable by a method according to any of claims 1 to 9.

11. Hard capsule comprising a dimensionally stable capsule body and a dimensionally stable capsule cap each having at least one side wall and one closed end, the capsule body and/or the capsule cap being produced by a method according to any of claims 1 to 9.

12. Hard capsule according to claim 11, **characterized in that** the capsule body and the capsule cap can be pushed coaxially into the other and/or the capsule body and the capsule cap have, in the particular at least one side wall and in the vicinity of their open end, a closure device that fits together and/or that produces a connection that is secure against separation after the capsule parts have been pushed together; and/or the capsule body comprises more than one compartment.

13. Molded part (1) according to claim 11, comprising a frustoconical body (2) that has a rim (3), a side wall (4), an inlet wall (5), wherein the inlet wall (5) comprises a flat or convex part (6), and a feed wall (7) which is located at a lower position and seals the rim (3), wherein the flat or convex portion (6) has a retracted or relief-like structure (8), wherein said retracted or relief-like structure (8) facilitates the piercing of said structure by blades which belong to the injection device and is located on a substantially circular path (9), the diameter of which path is defined by the diameter of the blades, which are likewise arranged in a circle, wherein the frustoconical body (2) is obtainable by a method according to any of claims 1 to 10.

## Revendications

1. Procédé de production d'une pièce moulée comprenant :
a. la mise à disposition d'une composition polymère contenant 70 à 99 % en poids d'un polyhydroxyalcanoate et 1 à 30 % en poids d'un polymère amylacé, le polyhydroxyalcanoate de la composition polymère comprend des unités monomères répétitives de formule (1)
[-O-CHR-CH₂-C(O)-] (1),
R représentant un groupe alkyle de formule CₙH₂ₙ₊₁ et n étant un nombre entier compris entre 1 et 15 ;
b. l'homogénéisation de la composition polymère en utilisant de l'énergie thermique et/ou mécanique ;
c. l'introduction de la composition polymère dans un moule ;
d. le moulage d'une pièce moulée dans le moule ;
e. le retrait de la pièce moulée du moule.

2. Procédé selon l'une des revendications précédentes, **caractérisé en ce que** l'homogénéisation de la composition polymère est effectuée à une température de 80 à 220 °C et/ou **en ce que** l'homogénéisation de la composition polymère est effectuée dans une extrudeuse.

3. Procédé selon l'une des revendications précédentes, **caractérisé en ce que** l'amidon ou l'amidon fonctionnalisé est essentiellement déstructuré lors de l'homogénéisation.

4. Procédé selon l'une des revendications précédentes, **caractérisé en ce que** le polymère amylacé est choisi dans le groupe constitué par l'amidon natif, l'amidon thermoplastique, l'amidon fonctionnalisé, le monophosphate d'amidon, le diphosphate d'amidon, le sulfate d'amidon, l'ester d'amidon, l'éther d'amidon, l'amidon d'hydroxypropyle, le carboxyméthylamidon, l'acétate d'amidon et leurs mélanges.

5. Procédé selon l'une des revendications précédentes, **caractérisé en ce que** la composition polymère contient moins de 10 % en poids, en particulier moins de 6 % ou moins de 4 % en poids, par rapport au poids total d'amidon et de plastifiant, d'un plastifiant contenant du carbone et comportant un poids moléculaire de 500 g/mol ou moins, en particulier 300 g/mol ou moins, comme le glycérol et/ou le sorbitol.

6. Procédé selon l'une des revendications précédentes, **caractérisé en ce que** la teneur en eau de la composition polymère avant l'introduction de la composition polymère dans le moule est fixée à moins de 10 % en poids, en particulier à moins de 7 % ou moins de 5 % en poids, par rapport au poids total de la composition polymère.

7. Procédé selon l'une des revendications précédentes, **caractérisé en ce que** n étant un nombre entier compris entre 1 et 6 ; et/ou **en ce que** le polyhydroxyalcanoate de la composition polymère étant choisi dans le groupe constitué par le poly(3-hydroxybutanoate), le poly(3-hydroxyvalérate), le poly(3-hydroxyhexanoate), le poly(3-hydroxybutyrate-co-3-hydroxyvalérate), le poly(3-hydroxybutyrate-co-3-hydroxyhexanoate) et leurs mélanges, et/ou le polyhydroxyalcanoate de la composition polymère est un copolymère et/ou **en ce que** le polyhydroxyalcanoate de la composition polymère présente un poids moléculaire moyen en poids compris entre 60 000 et 500 000 g/mol, en particulier entre 120 000 et 300 000 g/mol et/ou **en ce que** le polyhydroxyalcanoate de la composition polymère présente un point de fusion compris entre 120 et 200 °C, en particulier entre 150 et 180 °C.

8. Procédé selon l'une des revendications précédentes, **caractérisé en ce que** la pièce moulée aux étapes c. et d. est moulée par moulage par injection.

9. Procédé selon l'une des revendications précédentes, **caractérisé en ce que** la composition polymère est injectée dans le moule à l'étape c. à une pression supérieure à 1 bar, en particulier supérieure à 100 bar, et/ou **en ce que** la composition polymère est injectée dans le moule à l'étape c. à une pression comprise entre 150 et 3000 bar et/ou **en ce que** la composition polymère est injectée dans le moule à l'étape c. à une température de la composition polymère supérieure à 23 °C, en particulier supérieure à 50 °C, et/ou **en ce que** la composition polymère est injectée dans le moule à l'étape c. à une température de la composition polymère comprise entre 80 et 200 °C.

10. Pièce moulée pouvant être obtenue par un procédé selon l'une des revendications 1 à 9.

11. Capsule dure comprenant un corps de capsule dimensionnellement stable et un capuchon de capsule dimensionnellement stable comportant respectivement au moins une paroi latérale et une extrémité fermée, le corps de capsule et/ou le capuchon de capsule étant produits par un procédé selon l'une des revendications 1 à 9.

12. Capsule dure selon la revendication 11, **caractérisée en ce que** le corps de capsule et le capuchon de capsule peuvent être emboîtés l'un dans l'autre coaxialement et/ou **en ce que** le corps de capsule et le capuchon de capsule présentent, dans l'au moins une paroi latérale respective près de leur extrémité ouverte, un dispositif de fermeture pouvant s'y ajuster et/ou résultant en une liaison solidaire après que les parties de capsule sont emboîtées, et/ou **en ce que** le corps de capsule comprend plus d'un compartiment.

13. Pièce moulée (1) selon la revendication 11, comprenant un corps tronconique (2) comportant un bord (3), une paroi latérale (4), une paroi d'entrée (5), la paroi d'entrée (5) comprenant une partie plate ou convexe (6), et une paroi d'alimentation inférieure (7) qui scelle le bord (3), la partie plate ou convexe (6) présentant une structure rétractée ou en relief (8), ladite structure rétractée ou en relief (8) facilitant le perçage de ladite structure à l'aide de lames qui appartiennent à l'appareil d'injection, et ladite structure étant située sur une trajectoire essentiellement circulaire (9) dont le diamètre est défini par le diamètre des lames également disposées circulairement, le corps tronconique (2) pouvant être obtenu par un procédé selon l'une des revendications 1 à 10.
